# EUROPÄISCHE PATENTANMELDUNG

(11) **EP 1 211 877 A2**
(43) Veröffentlichungstag der Anmeldung: **05.06.2002**
(21) Anmeldenummer: 01123256.8
(22) Anmeldetag: 02.10.2001
(51) Int. Cl.: H04M 3/533

(54) **Einrichtung und Verfahren zum Weiterleiten von Nachrichten an Endgeräte verschiedener Kommunikationsmedien**

(30) Priorität: 29.11.2000 DE 10059327
(71) Anmelder: SIEMENS AKTIENGESELLSCHAFT, 80333 München (DE)
(72) Erfinder: Berndt, Stefan, 59427 Unna-Hemmere (DE); Bilke, Volkmar, 33154 Salzkotten (DE); Bozionek, Bruno, 33178 Borchen (DE); Carstensen, Meint-Uden, 33106 Paderborn (DE)

(57) **Zusammenfassung**

Eine Telekommunikationseinrichtung (EOS) zum Weiterleiten von für Zielteilnehmer bestimmten Nachrichten, mit einer Datenbank (TDB), welche teilnehmerspezifische Informationen (EIG) betreffend eine Anzahl von Zielteilnehmern (TN1,TN2) sowie diesen zugeordnete Endgeräte (TEC,TEP,PCC,MOG) und mit diesen Endgeräten kompatible Nachrichtenformate enthält, und mit einer Steuereinrichtung (EOA,BOS). Beim Empfang einer Nachricht für einen Zielteilnehmer wählt die Steuereinrichtung anhand der teilnehmerspezifischen Informationen ein oder mehrere Endgeräte (TEC,TFX), über welche(s) der Zielteilnehmer erreichbar ist, und mit diesen Endgeräten kompatible Nachrichtenformate aus, konvertiert die Nachricht mit Hilfe von Konversionsmoduln (KM1,KM2) und leitet sie zum Senden an die ausgewählten Endgeräte der jeweils entsprechenden Telekommunikationsnetz-Schnittstelle (TS1,TS2,TS3,ISS) weiter.

## Beschreibung

Die Erfindung betrifft eine Einrichtung zum Weiterleiten von Nachrichten, welche für Zielteilnehmer bestimmt sind, denen jeweils Endgeräte in zumindest einem Telekommunikationsnetz zugeordnet sind, mit einer Steuereinrichtung, mit einer Datenbank mit teilnehmerspezifischen Informationen und mit zumindest einer Telekommunikationsnetz-Schnittstelle, über welche Nachrichten mit Endgeräten der Zielteilnehmer und anderer Teilnehmer des zumindest einen Telekommunikationsnetzes austauschbar sind. Ebenso betrifft die Erfindung ein Verfahren zum Weiterleiten einer Nachricht, welche für einen Zielteilnehmer bestimmt ist.

Ein Informations- und Kommunikationsweg zu einem Telekommunikationsteilnehmer ist in Abhängigkeit von seinem Aufenthaltsort und dem Typ des von ihm gerade ausgewählten bzw. zur Verfügung stehenden Telekommunikationsmediums an unterschiedliche Endgeräte und damit an verschiedene Rufadressen und Übertragungsarten gebunden. Ein anderer Teilnehmer, der diesen Teilnehmer ("Zielteilnehmer") unabhängig von diesen Umständen erreichen möchte, z.B. um ihm eine Nachricht zukommen zu lassen, steht daher oftmals vor der Aufgabe, die im aktuellen Moment zutreffende Rufadresse des Zielteilnehmers zu erraten. Mögliche Übertragungsarten sind z.B. Festnetz-Telefone, Mobiltelefone, Telefax, Kurznachrichtendienste ('Short Message Service', SMS) - hierbei sind die Rufadressen gewöhnlich Rufnummern - oder elektronische Nachrichtendienste (sogenannte e-Mail-Dienste) - hierbei erfolgt die Adressierung über alphanumerische e-Mail-Adressen. Für den anderen Teilnehmer, der eine Verbindung mit dem Zielteilnehmer herzustellen bzw. mit diesem in Kontakt zu treten beabsichtigt, ist es daher häufig erforderlich, sämtliche möglichen Rufadressen und Medientypen des Zielteilnehmers zu kennen, eventuell noch mit einer zusätzlichen Information darüber, zu welchem Zeitpunkt welche der Rufadressen erfolgreich sein müsste.

Ein bekannter Lösungsansatz verwendet Rufumleitungen, beispielsweise derart, dass der Zielteilnehmer jeweils eine Umleitung zu seinem aktuellen Aufenthaltsort programmiert. Abgesehen davon, dass dies gewöhnlich mit einigem Aufwand verbunden ist und somit dem betreffenden Zielteilnehmer lästig wird, ist die Rufumleitung nur zwischen Endgeräten des gleichen Medientyps möglich.

Eine ähnliche Problemstellung, nämlich die Erreichbarkeitsverwaltung eines ortsungebundenen Teilnehmers, ist im Rahmen eines zellularen Mobilfunksystems bekannt, bei dem die Gesamtfläche, auf der das Netz betrieben wird, in Funkzellen aufgeteilt ist. Hierbei ist es eine Aufgabe des Netzes, für jeden der Netzteilnehmer zu verwalten, in welcher Funkzelle er sich aktuell befindet. In einem GSM-Netz ist für diesen Zweck ein sogenanntes Heimatregister ('Home Location Register', HLR) vorgesehen, welches alle für jeden Mobilfunkteilnehmer signifikanten Informationen, wie z.B. Rufnummer, Gerätekennung (IMSI) und Authentifikationsschlüssel, einschließlich dynamischer Teilnehmerdaten in einer Datenbank speichert. Die dynamischen Teilnehmerdaten sind temporärer Natur und enthalten beispielsweise den momentanen Aufenthaltsbereich (sogenanntes 'Location Area', LA) sowie eine netzinterne Adresse der zuständigen Mobilfunk-Vermittlungsstelle, d.h. jener Mobilfunk-Vermittlungsstelle, in deren Zuständigkeitsbereich jener Aufenthaltsbereich fällt, worin der betreffende Teilnehmer sich gerade aufhält. Die zuständige Mobilvermittlung hält in einem Besucherregister ('Visitor Location Register', VLR) einen Satz von Teilnehmerdaten, welche für den Verbindungsaufbau und -erhalt der Mobilteilnehmer benötigt werden, für die im Zuständigkeitsbereich befindlichen Mobilteilnehmer. Bei einem Wechsel eines Teilnehmer in einen anderen Aufenthaltsbereich werden die zugehörenden Teilnehmerdaten des Besucherregisters der betroffenen Mobilvermittlungen und des Heimatregisters entsprechend aktualisiert.

Die in einem Mobilfunknetz verwendete Erreichbarkeitsverwaltung geht jedoch davon aus, dass die mobilen Teilnehmer zwar ortsunabhängig sind, jedoch stets über jeweils ein bestimmtes Mobilgerät erreichbar sind. Der Typ des Mobilgeräts ist dabei bekannt und nicht veränderbar. Der Gebrauch verschiedener Endgeräte, womöglich verschiedener Art, was einen beträchtlichen Mehraufwand der hierzu verwendeten Protokolle mit sich bringt, ist in einem Mobilfunknetz nicht vorgesehen.

Es ist Aufgabe der Erfindung, die Erreichbarkeit eines Teilnehmer beim Wechsel zwischen mehreren Endgeräten, welche verschiedenen Typs sein können, zu verbessern. Insbesondere soll es möglich sein, die Erreichbarkeit sowohl über ortsfeste wie auch über mobile Endgeräte je nach Wahl des Teilnehmers zu gestatten.

Die Aufgabe wird von einer Einrichtung der eingangs genannten Art gelöst, in welcher erfindungsgemäß eine Datenbank teilnehmerspezifische Informationen enthält, welche eine Anzahl von Zielteilnehmern sowie den Zielteilnehmern zugeordnete Endgeräte in zumindest einem Telekommunikationsnetz und mit diesen Endgeräten kompatible Nachrichtenformate betreffen, und zumindest ein Konversionsmodul zum Konvertieren zwischengespeicherter Nachrichten in eines oder mehrere der in der Datenbank angegebenen Nachrichtenformate vorgesehen ist, wobei ein Steuereinrichtung dazu eingerichtet ist, beim Empfang einer für einen Zielteilnehmer bestimmten Nachricht anhand der teilnehmerspezifischen Informationen zumindest ein Endgerät, über welches der Zielteilnehmer erreichbar ist, und zumindest eines mit diesem Endgerät (bzw. mit jeweils einem dieser Endgeräte) kompatiblen Nachrichtenformats auszuwählen, die Nachricht in Abhängigkeit von dem so ausgewählten Nachrichtenformat dem bzw. einem Konversionsmodul zur Konversion zuzuführen und von diesem konvertierte Nachrichten entgegenzunehmen und zum Senden an das zumindest eine ausgewählte Endgerät der dem betreffenden Nachrichtenformat jeweils entsprechenden Telekommunikationsnetz-Schnittstelle weiter zu leiten.

Ebenso wird die gestellte Aufgabe von einem Verfahren der eingangs genannten Art gelöst, bei welchem erfindungsgemäß folgende Schritte seitens der Einrichtung ausgeführt werden:
a) Empfang der Nachricht;
b) Auswahl zumindest eines Endgerätes, über welches der Zielteilnehmer erreichbar ist, und zumindest eines mit diesem Endgerät (bzw. mit jeweils einem dieser Endgeräte) kompatiblen Nachrichtenformats anhand der in der Datenbank gespeicherten teilnehmerspezifischer Informationen;
c) Konversion der zwischengespeicherten Nachricht in das zumindest eine ausgewählte Nachrichtenformat;
d) Senden der konvertierten Nachricht an das zumindest eine ausgewählte Endgerät über ein dem betreffenden Nachrichtenformat jeweils entsprechendes Telekommunikationsnetz.

Die Erfindung löst die gestellte Aufgabe auf einfache und umfassende Weise. Die erfindungsgemäße Einrichtung gestattet dabei die Verknüpfung unterschiedlicher Telekommunikationstechnologien, um den Informationsfluss über unterschiedliche Medien an den Ort zu leiten, an dem sich der Teilnehmer aktuell befindet.

Vorteilhafte Weiterbildungen der Erfindung sind in den abhängigen Ansprüchen angegeben.

Die Erfindung samt weiterer Vorteile wird im folgenden anhand eines nicht einschränkenden Ausführungsbeispiels unter Verwendung der beigefügten Figuren näher erläutert.

Dabei zeigen:
- Fig. 1: ein Strukturbild zur schematischen Darstellung eines Telekommunikationsnetzwerks mit einem Kommunikationsserver gemäß dem Ausführungsbeispiel;
- Fig. 2: ein Strukturbild zur schematischen Darstellung des Kommunikationsservers; und
- Fig. 2a: ein Ausschnitt aus einer Teilnehmer-Datenbank des Kommunikationsservers.

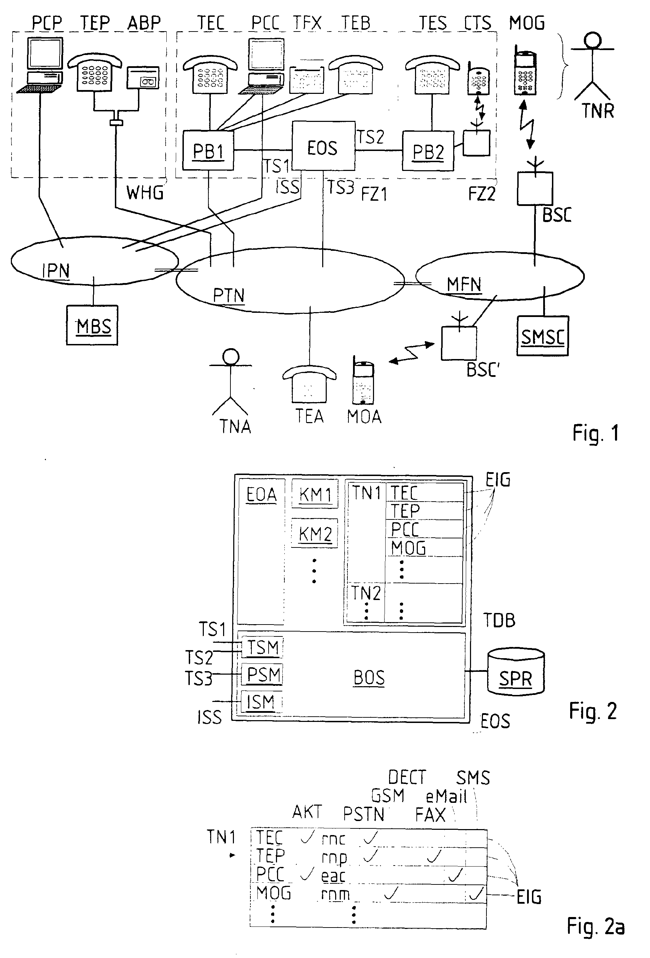

Wie eingangs bereits ausgeführt, ist es häufig der Fall, dass einem Teilnehmer eine Vielzahl von Telekommunikationsendgeräten zugeordnet sind. Dies ist in Fig. 1 am Beispiel eines in einer Firma mit zwei Firmensitzen FZ1,FZ2 tätigen Teilnehmers TNR aufgezeigt, der im hier betrachteten Ausführungsbeispiel einen Zielteilnehmer im Sinne der Erfindung repräsentiert.

In einem ersten Firmensitz FZ1 stehen dem Teilnehmer TNR an seinem Büro-Arbeitsplatz beispielsweise ein Telefonendgerät TEC, eine Datenverarbeitungseinrichtung PCC - beispielsweise ein Persoanl Computer, kurz PC - sowie an einem anderen Platz (z.B. in einem Gemeinschaftsraum oder bei einer Sekretärin) ein weiteres Telefonendgerät TEB zur Verfügung. Außerdem wird von ihm dort ein Telefax-Gerät TFX verwendet. Die über ein leitungsgebundenes Telefonnetz anschließbaren Geräte TEC,TEB, TFX sind in dem gezeigten Ausführungsbeispiel über eine Hausanlage PB1 (eine sogenannte PBX, 'Private Branch eXchange') mit einem öffentlichen Festnetz PTN verbunden. In einer Variante könnte die Anbindung des Hausnetzes auch n bekannter Weise an ein Mobilfunknetz MFN - beispielsweise ein GSM-Netz - ausgeführt sein. Die Datenverarbeitungseinrichtung PCC ist - z.B. über ein (nicht gezeigtes) Modem oder über eine Standleitung - mit dem sogenannten Internet IPN verbindbar.

In einem zweiten Firmensitz FZ2 - beispielsweise einem Laboratorium - hat der Teilnehmer TNR ein ortsfestes Telefonendgerät TES sowie ein Schnurlosgerät CTS, z.B. nach dem bekannten DECT-Standard ('Digital Enhanced Cordless Telecommunication'). Diese Endgeräte TES,CTS sind über eine Hausanlage PB2 des Standorts FZ2 mit dem öffentlichen Telefonnetz verbunden. Zudem verfügt der Teilnehmer TNR über ein Mobilgerät MOG (sogenanntes "Handy") von dem aus er über das Mobilfunknetz MFN erreichbar ist. Das Mobilgerät MOG kann auch als Dual-Mode-Handy ausgestaltet sein, sodass der Teilnehmer im Bereich der DECT-Anlage des zweiten Firmensitzes FZ2 über die Schnurlos-Schnittstelle der Hausanlage PB2 Gespräche führen kann.

Des weiteren ist in einer Wohnung WHG des Teilnehmer TNR ein Festnetzanschluss eingerichtet, an dem z.B. neben einem (privaten) Telefonendgerät TEP ein Anrufbeantworter ABP angeschlossen ist. Außerdem kann eine privaten Datenverarbeitungseinrichtung PCP des Teilnehmers mit dem Internet IPN verbunden werden.

In der Figur sind die verschiedenen Kommunikationsnetze lediglich symbolisch gezeigt, da die innere Struktur dieser Kommunikationsnetze für die Erfindung nicht von Belang ist. Der Vollständigkeit halber sind aufseiten des Mobilfunknetzes MFN Basisstationen BSC,BSC' sowie ein sogenanntes SMSC ('Short Message Service Center') zur Unterstützung der Übermittlung von Kurznachrichten dargestellt, sowie aufseiten des Internets IPN ein Server MBS ('Mail Box Server'), der Internet-Teilnehmern z.B. sogenannte e-Mail-Boxes zur Zwischenspeicherung von e-Mail-Nachrichten zur Verfügung stellt. Die Netze PTN,MFN,IPN sind untereinander nach bekannter Art, z.B. über sogenannte Gateways, miteinander verknüpft.

In Fällen, in denen ein weiterer Teilnehmer TNA, z.B. über ein ihm zugeordnetes Festnetztelefon TEA, ein Mobilgerät MOA oder - z.B. per e-Mail - über das Internet IPN, den Zielteilnehmer TNR zu erreichen versucht, so kennt dieser Teilnehmer TNA gewöhnlich nicht den momentanen Aufenthaltsort des Zielteilnehmers TNR. Häufig ist auch nur eine oder ein paar der Rufnummern bzw. Zieladressen bekannt, über die der Zielteilnehmer TNR erreichbar ist. Eine "Telefonsuche" ist umständlich, oftmals zeitraubend und für beide beteiligten Teilnehmer TNA,TNR lästig. Außerdem kann beispielsweise der Fall eintreten, dass der Zielteilnehmer TNR über ein Endgerät eines Kommunikationstyps - z.B. ein Festnetztelefon oder eine zur Verarbeitung von e-Mail-Nachrichten eingerichtete Datenverarbeitungseinrichtung - erreichbar ist, jedoch der andere Teilnehmer TNA mit ihm über eine Nachricht eines anderen Kommunikationstyps, z.B. eine SMS-Kurznachricht, in Kontakt treten will.

Gemäß der Erfindung ist zum Weiterleiten und Konvertieren von Nachrichten, welche zwischen dem Zielteilnehmer TNR und anderen Teilnehmern TNA ausgetauscht werden, eine Telekommunikationseinrichtung als Kommunikationsserver EOS vorgesehen. Diese hält in einer Teilnehmer-Datenbank TDB teilnehmerspezifische Informationen, welche anhand der Zielteilnehmer in Benutzerprofile in Form von Eintragsgruppen TN1,TN2,... geordnet ist (wobei hier der Einfachheit halber der Teilnehmer TNR der ersten Eintragsgruppe TN1 entsprechen soll). Jede Eintragsgruppe enthält Einträge EIG, welche - siehe Fig. 2a - jeweils Informationen über ein dem betreffenden Teilnehmer zugeordnetes Telekommunikationsendgerät TEC,TEP,PCC,MOG,... enthalten. Dies können beispielsweise die dem Endgerät zugeordnete Rufadresse rnc,rnp,eac,rnm,... (Rufnummer bzw. Zieladresse, wie z.B. e-Mail-Adresse) sein, die zugehörenden Kommunikationstypen bzw. die kompatiblen Nachrichtenformate (Festnetz PSTN, GSM, DECT, Telefax, E-Mail, SMS, etc.) z.B. in Form einer Liste, in denen die entsprechenden Felder aktiviert sind, sowie bei Bedarf weitere Informationen.

Zur Durchführung der Nachrichtenweiterleitung weist der Kommunikationsserver EOS ein Anwendungsmodul EOA auf, das in gezeigten Ausführungsbeispiel als ein auf einem Betriebssystem BOS aufgesetztes Anwendungsprogramm realisiert ist. Für die Konversion von Nachrichten zwischen verschiedenen Kommunikations- bzw. Nachrichtentypen sind des weiteren Konversionsmodule KM1,KM2,... vorgesehen, z.B. Zusatzroutinen, die von der Anwendung EOA aufrufbar sind. Außerdem ist dem Kommunikationsserver EOS ein Speichermedium SPR zum Zwischenspeichern von Nachrichten sowie zum dauerhaften Speichern der Teilnehmer-Datenbank TDB zugeordnet. Alternativ kann dieses Speichermedium ebenso in den Kommunikationsserver EOS integriert sein.

Der Kommunikationsserver EOS ist an die privaten Netze PB1, PB2 sowie an das Festnetz PTN und das Internet IPN über Telefon-Schnittstellen TS1,TS2,TS3 bzw. eine Datennetz-Schnittstelle ISS anschließbar. Alternativ wäre auch eine zusätzliche Anbindung an ein Funknetz MFN (nicht gezeigt) denkbar. Die Schnittstellen TS1,TS2,TS3,ISS werden durch dem Betriebssystem BOS zugeordneten Schnittstellenmodule TSM,PSM,ISM realisiert, die in bekannter Weise dem Austausch von Signalisierungsinformation (z.B. zum Verbindungsaufbau und -erhalt) sowie dem Senden und Empfangen von Nachrichten über diese Schnittstellen dienen.

Gemäß der Erfindung ist der Kommunikationsserver EOS - genauer gesagt das Anwendungsmodul EOA - derart eingerichtet, beim Empfang einer für den Zielteilnehmer TNR bestimmten Nachricht anhand der teilnehmerspezifischen Informationen der Datenbank TDB ein oder mehrere Endgeräte, über welches der Zielteilnehmer TNR erreichbar ist, sowie entsprechende, d.h. mit den Endgeräten kompatiblen, Nachrichtenformate auszuwählen. Die Auswahl erfolgt beispielsweise über ein weiteres Element AKT (siehe Fig. 2a), welches in den dem betreffenden Zielteilnehmer TNR zugeordneten Einträgen EIG vorhanden ist und angibt, zu welchen Endgeräten aktuell Nachrichten gesendet werden können bzw. sollen. Alternativ kann auch mehr als ein Endgerät des Zielteilnehmers TNR in dem zugehörenden Benutzerprofil TN1 aktiviert sein. Die Nachricht wird anschließend in das bzw. in die ausgewählten Nachrichtenformate konvertiert. Hierzu ruft das Anwendungsmodul EOA die entsprechenden Konversionsmodule KM1,KM2 auf, übergibt ihnen die zu konvertierenden Nachrichten und nimmt nach einer erfolgten Konvertierung die konvertierten Nachrichten entgegen. Hierbei ist es günstig, wenn aus Gründen der Datensicherheit die empfangenen und/oder die konvertierten Nachrichten zwischengespeichert werden. Anschließend werden die Nachrichten an die ausgewählten Endgeräte über die betreffenden Schnittstellen versendet.

Die Zuleitung der Nachrichten zum Kommunikationsserver EOS anstelle einer Zuleitung zu einem Endgerät des Zielteilnehmer TNR kann beispielsweise mit Hilfe von Rufumleitungen realisiert werden. Anhand der mit der Rufsignalisierung übergebenen Information kann das Anwendungsmodul EOA ermitteln, welcher Zielteilnehmer TNR ursprünglich vom rufenden Teilnehmer TNA angewählt wurde und kann die weitere Bearbeitung aufgrund der diesem Zielteilnehmer TNR zugeordneten Eintragsgruppe TN1 veranlassen bzw. durchführen.

Eine andere Möglichkeit ist die, dass dem Teilnehmer TNA als Rufadresse des Zielteilnehmers TNR eine Rufadresse des Kommunikationsservers EOS bekannt gegeben wird, die eindeutig dem Zielteilnehmer TNR zugeordnet ist oder zweckmäßigerweise zusätzliche, den Zielteilnehmer TNR spezifizierende Information enthält. Beispielsweise kann als Telefonnummer eine Rufnummer des Kommunikationsservers EOS verwendet werden, an die als Suffix (wie bei einer Nebenstellenanlage) eine teilnehmerspezifische Kennung angehängt ist. Im Falle von e-Mail-Adressen kann für den Kommunikationsserver EOS eine sogenannte e-Mail-Domäne reserviert werden. Den Zielteilnehmern TNR werden in dieser Domäne dabei beispielsweise Adressen nach dem Schema 'teilnehmer@serverdomain' zugeordnet.

Die Aktualisierung der Erreichbarkeit des Zielteilnehmers TNR in der Datenbank TDB erfolgt durch entsprechende Änderung des Elements AKT in den Einträgen der zugeordneten Eintragsgruppe TN1. Dies kann z.B. dadurch geschehen, dass der Zielteilnehmer TNR selbst von einem seiner Endgeräte aus, günstigerweise über eine eigens für diesen Zweck eingerichtete Rufadresse, den Kommunikationsserver EOS anruft bzw. an diesen eine Nachricht sendet. Dies signalisiert dem Kommunikationsserver EOS, dass das betreffende Endgerät zu aktivieren ist, d.h. das Element AKT des zugehörenden Eintrags wird gesetzt. Im einfachsten Fall werden die Elemente AKT der übrigen Einträge zurückgesetzt. Alternativ kann vorgesehen sein, dass über zusätzliche Informationen, z.B. nachgewählte Ziffern oder Textbefehle in einer e-Mail-Nachricht, bei Bedarf die übrigen Einträge gesteuert werden können. So kann beispielsweise ein bestimmter Zusatz bedeuten, dass die bisher gesetzten Elemente nicht zurückgesetzt werden, ein anderer dagegen, dass alle Elemente AKT der betreffenden Eintragsgruppe TN1 gesetzt werden. Letztere Möglichkeit aktiviert somit die Zustellung an alle Endgeräte des Zielteilnehmers TNR.

Im folgenden wird anhand einiger Fallbeispiele die erfindungsgemäße Behandlung und Konversion von Nachrichten veranschaulicht.

### E-Mail zu Telefax:

Der Teilnehmer TNA sendet eine e-Mail-Nachricht, wobei in dem Adressenverzeichnis dieser e-Mail-Nachricht - möglicherweise neben anderen Adressaten - der Zielteilnehmer TNR genannt ist. In einem dem Telefaxgerät TFX zugeordneten Eintrag EIG der Teilnehmer-Datenbank TDB ist das Element AKT gesetzt. Die e-Mail-Nachricht wird dem Kommunikationsserver EOS zugestellt. Das Anwendungsprogramm EOA führt daraufhin mit Hilfe eines entsprechenden Konversionsmoduls nach bekannter Art die Konversion der e-Mail-Nachricht in das Telefaxformat durch. Die auf diese Weise gewonnene Telefax-Nachricht wird anschließend an das Telefaxgerät TFX gesendet.

### E-Mail zu SMS-Kurznachricht:

Zusätzlich zu dem vorangegangenen Fallbeispiel ist das Mobilgerät MOG des Zielteilnehmers TNR hinsichtlich des SMS-Eintrags aktiviert. In diesem Fall erfolgt die Konversion nach bekannter Art mit einem Konversionsmodul, welches für die Umwandlung von e-Mail-Nachrichten zu SMS-Kurznachrichten eingerichtet ist. Im übrigen entspricht dieses Fallbeispiel dem vorangegangenen.

Die Konversion von e-Mail-Nachrichten kann auch seitens des Zielteilnehmers TNR veranlasst werden, z.B. für den Fall, dass die e-Mail-Nachrichten in einem elektronischen Briefkasten MBS (sogenannte e-Mail-Box) abgelegt werden. Dies geschieht beispielsweise durch einen Anruf des Zielteilnehmers TNR von seinem Mobilgerät MOG aus zu einer dem Kommunikationsserver EOS zugeordneten, für diesen Zweck vorgesehenen Rufnummer. In diesem Fall ruft der Kommunikationsserver EOS den Briefkasten-Server MBS über das Internet IPN ab. Die weitere Verarbeitung erfolgt wie bereits beschreiben.

### E-Mail zu Sprache/Telefon:

Wie vorhergehend, jedoch ist das Mobilgerät MOG nur für Sprachnachrichten, nicht für SMS-Kurznachrichten aktiviert. Anstelle der Umwandlung der e-Mail-Nachricht zu einer SMS-Kurznachricht erfolgt mit Hilfe eines sogenannten TTS-Konverters ('Text To Speech') bekannter Art eine Umwandlung in eine Sprachnachricht.

Gleiches gilt für die Zustellung zu einem Festnetztelefon.

### Termindatei zu Sprache/Telefon:

Dieses Fallbeispiel kann als Weiterbildung des vorhergehenden Fallbeispiels angesehen werden. Der Zielteilnehmer TNR hat beispielsweise auf seiner Datenverarbeitungseinrichtung PCC einen elektronischen Terminkalender und möchte über sein privates Telefon TEP die darin enthaltenen Termine abfragen. Durch einen Anruf ausgehend von seinem Telefon TEP zu einer dem Kommunikationsserver EOS zugeordneten, für diesen Zweck vorgesehenen Rufnummer, veranlasst, wird vom Anwendungsmodul EOA eine Abfrage über das Internet IPN oder ein anderes Datennetz - z.B. ein (in Fig. 1 nicht gezeigtes) LAN-Netzwerk - gestartet. Das Anwendungsmodul EOA nimmt von dem elektronischen Terminkalender des Zielteilnehmers TNR die Termine entgegen, die z.B. in Textform vorliegen, und wandelt sie mittels eines TTS-Konverters in Sprachnachrichten um. Diese können dann wie bereits weiter oben behandelt an das private Telefon TEP übertragen werden.

### Telefax zu E-Mail:

Der Kommunikationsserver EOS erhält eine Telefaxnachricht, die für den Zielteilnehmer TNR bestimmt ist. Die Datenverarbeitungseinrichtung PCC ist im zugehörenden Eintragsfeld TN1 der Teilnehmer-Datenbank TDB aktiviert. Das Telefax wird durch das Anwendungsmodul EOA in eine e-Mail-Nachricht konvertiert und über das Internet IPN an die Datenverarbeitungseinrichtung PCC gesendet. Da ein Telefax einer Pixel-Grafik entspricht, wird günstigerweise in dem Telefax enthaltener Text mit einem OCR-Modul zur optischen Zeichenerkennung ('Optical Character Recognition') konvertiert und als lesbarer Text in die e-Mail-Nachricht eingesetzt. Zusätzlich wird das gesamte Telefax als Grafik-Datei als sogenanntes Attachment an die e-Mail-Nachricht angefügt. Auf diese Weise können im Telefax vorhandene Bildinformationen nicht verloren gehen.

### SMS-Kurznachricht zu E-Mail:

Der Zielteilnehmer TNR möchte in diesem Fallbeispiel die für sein Mobiltelefon MOG hinterlegten SMS-Kurznachrichten über seine private Datenverarbeitungseinrichtung PCP abrufen und lesen. Ein Grund hierfür liegt beispielsweise darin, dass er die SMS-Kurznachrichten nicht auf dem kleinen Display seines Mobiltelefons MOG, sondern stattdessen bequem auf dem Bildschirm seiner privaten Datenverarbeitungseinrichtung PCP lesen will.

Durch einen Anruf des Zielteilnehmers TNR ausgehend von seinem Mobilgerät MOG zu einer für diesen Zweck vorgesehenen Rufnummer des Kommunikationsservers EOS wird dieser Vorgang ausgelöst. Der Kommunikationsserver EOS ruft von der SMS-Station SMSC des betreffenden Mobilfunknetzes MFN die SMS-Kurznachrichten des Zielteilnehmers TNR ab und konvertiert diese mit Hilfe eines Konversionsmodul zur Umwandlung von SMS-Kurznachrichten in e-Mail-Nachrichten. Diese werden dann über die Internet-Schnittstelle ISS vom Briefkasten-Server MBS über das Internet IPN an die private Datenverarbeitungseinrichtung PCP bzw. die zugeordnete e-Mailbox MBS des Zielteilnehmers TNR gesendet.

### Sprache/Telefon zu E-Mail:

Der Kommunikationsserver EOS erhält eine für den Zielteilnehmer TNR bestimmte Sprachnachricht, z.B. über das Festnetz PTN. Die Datenverarbeitungseinrichtung PCC ist in dem zugehörenden Benutzerprofil TN1 der Teilnehmer-Datenbank TDB aktiviert. Die Sprachnachricht wird seitens des Kommunikationsservers EOS in Form einer Audio-Datei in einem bekannten Audio-Datenformat aufgezeichnet. Eine an die Datenverarbeitungseinrichtung PCC gerichtete e-Mail-Nachricht wird generiert, in dieser die Audio-Datei als Attachment angefügt, und die so erhaltene Nachricht über das Internet IPN an die Datenverarbeitungseinrichtung PCC bzw. die dem Zielteilnehmer TNR zugeordnete e-Mailbox versendet.

Zusätzlich kann die Sprachnachricht mittels eines ASR-Modul zur automatisierten Spracherkennung ('Automated Speech Recognition') konvertiert und als lesbarer Text in die e-Mail-Nachricht eingesetzt werden.

In ähnlicher Weise kann der Zielteilnehmer TNR Nachrichten abfragen, die auf seinem Anrufbeantworter ABP abgelegt wurden. Hierzu sendet der Zielteilnehmer TNR beispielsweise von seiner Datenverarbeitungseinrichtung PCP aus per e-Mail-Nachricht eine Auftragsnachricht an den Kommunikationsserver EOS, die einen dahingehenden Befehl enthält. Das Anwendungsmodul EOA führt nun eine Fernabfrage zum Anrufbeantworter ABP durch. Die Signalisierung hierfür erfolgt nach bekannter Art und Weise beispielsweise mittels DTMF-Signalen. Die vom Anrufbeantworter ABP abgespielten Sprachnachrichten werden wie bereits beschreiben entgegengenommen und weiter verarbeitet.

### Sprache/Telefon zu Termindatei:

Ähnlich wie die Konversion von Termindaten in eine Sprachnachricht kann dieses Fallbeispiel als Weiterbildung der Umwandlung einer Sprachnachricht in eine e-Mail-Nachricht angesehen werden. Anschließend an die Konversion des telefonisch durchgegebenen Termins - z.B. über eine hierfür eigens vorgesehene Rufnummer des Kommunikationsservers EOS - in ein Textformat wie weiter oben behandelt, wird die so gewonnene Termin-Nachricht an den elektronischen Terminkalender des Zielteilnehmers TNR übertragen und dort in die Terminverwaltung aufgenommen.

Selbstverständlich lassen sich die genannten Fallbeispiele auch kombinieren. So ergibt sich aus einer Kombination der Umwandlung von Telefax in eine e-Mail-Nachricht und der Umwandlung von einer e-Mail-Nachricht in eine Sprachnachricht die Behandlung von Telefax-Nachrichten, die einem Telefon als Sprachnachrichten zugeführt werden.

Die Erfindung lässt sich zudem zur Kopplung eines Anrufbeantwortersystems mit einem e-Mail-System verwenden. Es ist bekannt, dass ein Zielteilnehmer TNR, der für längere Zeit abwesend (z.B. im Urlaub) ist, in seinem e-Mail-System eine Abwesenheitsmeldung aktiviert, in die z.B. die Dauer und der Grund seiner Abwesenheit angegeben ist und die als Antwort auf eintreffende e-Mail-Nachrichten an den jeweiligen Absender zurückgesendet wird. Zusätzlich wird der Zielteilnehmer TNR den Ansagetext seines Anrufbeantworters ABP ändern, so dass ein Anrufer über Dauer und Grund der Abwesenheit informiert wird. Um diesen Vorgang zu vereinfachen, sodass der Zielteilnehmer TNR die Eintragung nur einmal vornehmen muss, anstatt diese in beiden Systemen getrennt durchzuführen, sollen beide Systeme mit Hilfe der Erfindung gekoppelt werden.

Erstellt und aktiviert der Zielteilnehmer TNR bei seinem e-Mail-System eine Abwesenheitsmeldung, so wird zugleich eine Nachricht an den Kommunikationsserver EOS gesendet, die den Text der Abwesenheitsmeldung enthält. Der Text wird nun mittel TTS-Konversion in eine Sprachnachricht umgewandelt, und das Anwendungsmodul EOA führt eine Fernabfrage zu dem Anrufbeantworter ABP durch, in dem der bisher gültige Ansagetext des Anrufbeantworters ABP abgespielt und gespeichert und anstelle dessen die vorher gewonnene Sprachnachricht als neuer Ansagetext aufgespielt wird. Wenn zu späterem Zeitpunkt der Zielteilnehmer TNR die Abwesenheitsmeldung deaktiviert, so wird in entsprechender Weise der ursprüngliche Ansagetext wieder auf den Anrufbeantworter ABP aufgespielt. Anstelle des ursprünglichen Ansagetextes könnte natürlich auch ein neuer, vom Zielteilnehmer TNR bei Deaktivierung der Abwesenheitsmeldung neu eingegebener und TTS-konvertierter Text als neue Ansage aufgespielt werden.

Des weiteren kann vorgesehen sein, dass während der Abwesenheit Nachrichten für den Zielteilnehmer TNR über den Kommunikationsserver EOS nach Art eines Anrufbeantworters ABP hinterlassen werden können. Die so hinterlassenen Nachrichten können zum einen auf den Anrufbeantworter ABP des Zielteilnehmers TNR überspielt werden. Zum anderen können die Sprachnachrichten seitens des Kommunikationsservers EOS wie oben im Zusammenhang mit der Umwandlung von einer Sprachnachricht in eine e-Mail-Nachricht behandelt in ein e-Mail-Format umgewandelt und zwischengespeichert werden. Der Anwender kann dann nach seiner Abwesenheit oder vom Ort seiner Abwesenheit aus (sofern dort ein e-Mail-Zugang verfügbar ist) auf einfache Weise die eingegangenen Sprachnachrichten abhören.

Der erfindungsgemäße Kommunikationsserver EOS eignet sich auch zum typunabhängigen Verteilen von Nachrichten des Zielteilnehmers TNR an andere Teilnehmer TNA. Wenn beispielsweise der Zielteilnehmer TNR eine Sprachnachricht an einen Empfänger senden will, wobei die Nachricht seitens des Empfängers als e-Mail-Nachricht zugestellt werden soll, so verfährt der Kommunikationsserver EOS grundsätzlich wie weiter oben unter dem Fallbeispiel "Sprache/Telefon zu E-Mail" beschrieben. Der Kommunikationsserver EOS erhält von dem Zielteilnehmer TNR die Sprachnachricht, die seitens des Kommunikationsservers EOS in Form einer Audio-Datei in einem bekannten Audio-Datenformat aufgezeichnet wird. Eine an den Empfänger gerichtete e-Mail-Nachricht wird generiert, dieser die Audio-Datei als Attachment angefügt, und die so erhaltene Nachricht über das Internet an den Empfänger bzw. die zugeordnete e-Mailbox geleitet. Zusätzlich kann die Sprachnachricht mittels eines ASR-Moduls zur automatisierten Spracherkennung ('Automated Speech Recognition') konvertiert und als lesbarer Text in die e-Mail-Nachricht eingesetzt werden. Ebenso kann auch für andere Kombinationen der Nachrichtentypen der vom Zielteilnehmer TNR gesendeten Nachricht einerseits und des Empfängerseitigen Endgeräts verfahren werden, wobei sich die Einzelheiten ohne weiteres aus dem weiter oben Gesagten ergeben.

## Patentansprüche

1. Telekommunikationseinrichtung (EOS) zum Weiterleiten von für einen Zielteilnehmer (TNR) bestimmten Nachrichten,
mit einer Steuereinrichtung (BOS,EOA),
mit einer Datenbank (TDB) zur Speicherung von teilnehmerspezifischen Informationen, und
mit zumindest einer Telekommunikationsnetz-Schnittstelle (TS1,TS2,TS3,ISS), über welche Nachrichten mit Telekommunikationsnetzen (PTN,MFN,IPN) austauschbar sind,
**dadurch gekennzeichnet,**
**dass** die teilnehmerspezifischen Informationen (EIG) eine Anzahl von Zielteilnehmern (TNR) sowie den Zielteilnehmern (TNR) zugeordnete Endgeräte (TEC, TEP,PCC,MOG) und mit diesen Endgeräten (TEC,TEP,PCC,MOG) kompatible Nachrichtenformate kennzeichnen,
**dass** zumindest ein Konversionsmodul (KM1,KM2) zum Konvertieren zwischengespeicherter Nachrichten in eines oder mehrere der in der Datenbank (TDB) angegebenen Nachrichtenformate vorgesehen ist, und
**dass** die Steuereinrichtung (BOS,EOA) dazu eingerichtet ist, beim Empfang einer für einen Zielteilnehmer (TNR) bestimmten Nachricht anhand der teilnehmerspezifischen Informationen zumindest ein Endgerät (TEC,TEP,PCC,MOG), über welches der Zielteilnehmer (TNR) erreichbar ist, und zumindest eines mit diesem Endgerät (TEC, TEP, PCC, MOG) kompatiblen Nachrichtenformats auszuwählen, die Nachricht in Abhängigkeit von dem so ausgewählten Nachrichtenformat zumindest einem Konversionsmodul (KM1,KM2) zuzuführen und die von diesem konvertierte Nachrichten entgegenzunehmen und zum Senden an das zumindest eine ausgewählte Endgerät (TEC,TEP,PCC,MOG) der dem betreffenden Nachrichtenformat jeweils entsprechenden Telekommunikationsnetz-Schnittstelle weiter zu leiten.

2. Telekommunikationseinrichtung nach Anspruch 1,
**dadurch gekennzeichnet,**
**dass** eine Speichereinrichtung (SPR) zum Zwischenspeichern von über die zumindest eine Telekommunikationsschnittstelle (TS1, TS2,TS3,ISS) empfangenen Nachrichten und/oder von konvertierten Nachrichten vorgesehen ist.

3. Telekommunikationseinrichtung nach Anspruch 1 oder 2,
**dadurch gekennzeichnet,**
**dass** in den teilnehmerspezifischen Informationen (EIG) der Datenbank (TDB) ein Informationselement (AKT) enthalten ist, welches die auszuwählenden Endgeräte (TEC,TEP,PCC,MOG) kennzeichnet.

4. Telekommunikationseinrichtung nach Anspruch 3,
**dadurch gekennzeichnet,**
**dass** die Steuereinrichtung (BOS,EOA) zusätzlich dazu eingerichtet ist, das Informationselement (AKT) aufgrund von seitens des betreffenden Zielteilnehmers (TNR) abgesandten Nachrichten, welche Information betreffend seine Erreichbarkeit enthalten, zu ändern.

5. Verfahren zum Weiterleiten einer für einen Zielteilnehmer (TNR) bestimmten Nachricht,
**gekennzeichnet durch** folgende Schritte, welche seitens einer Telekommunikationseinrichtung (EOS) ausgeführt werden:
a) Empfang der Nachricht,
b) Auswahl zumindest eines Endgerätes (TEC,TEP,PCC,MOG), über welches der Zielteilnehmer (TNR) erreichbar ist, und zumindest eines mit diesem Endgerät (TEC,TEP,PCC,MOG) kompatiblen Nachrichtenformats anhand von teilnehmerspezifischer Informationen (EIG),
c) Konversion der zwischengespeicherten Nachricht in das zumindest eine so ausgewählte Nachrichtenformat, und
d) Senden der konvertierten Nachricht an das zumindest eine so ausgewählte Endgerät (TEC,TEP,PCC,MOG) über ein dem betreffenden Nachrichtenformat jeweils entsprechendes Telekommunikationsnetz (PTN, MFN, IPN).

6. Verfahren nach Anspruch 5,
**dadurch gekennzeichnet,**
**dass** in Schritt a) und/oder in Schritt c) die zumindest eine Nachricht auf einer Speichereinrichtung (SPR) zwischengespeichert wird.

7. Verfahren nach Anspruch 5 oder 6,
**dadurch gekennzeichnet,**
**dass** in Schritt b) die Auswahl aufgrund eines in den teilnehmerspezifischen Informationen (EIG) enthaltenen Informationselements (AKT) erfolgt, welches die auszuwählenden Endgeräte (TEC,TEP,PCC,MOG) kennzeichnet.
